Europäisches Patentamt

European Patent Office

Office européen des brevets

(11) Veröffentlichungsnummer: **0 079 402**
**A1**

## (12) EUROPÄISCHE PATENTANMELDUNG

(21) Anmeldenummer: **81201266.4**

(22) Anmeldetag: **13.11.81**

(51) Int. Cl.³: **B 65 G 1/06**

(43) Veröffentlichungstag der Anmeldung:
**25.05.83 Patentblatt 83/21**

(84) Benannte Vertragsstaaten:
**AT BE CH DE FR GB IT LI LU NL SE**

(71) Anmelder: **Technisch Ontwikkelingsbureau van Elten B.V.**
**Baron van Nagellstraat 174**
**NL-3700 AA Barneveld(NL)**

(72) Erfinder: **de Vries, Hugo Victor**
**Hamburgerweg 144**
**NL-3851 EP Ermelo(NL)**

(74) Vertreter: **Kooy, Leendert Willem et al,**
**OCTROOIBUREAU VRIESENDORP & GAADE P.O. Box 266**
**NL-2501 AW The Hague(NL)**

(54) Verbessertes Verfahren zur Verarbeitung einer Auftragszusammenstellung für Produkte unter Benutzung von Trägern.

(57) Das Zusammensetzen von aus verschiedenen Produkten in Pappschachtel oder Lattenkisten verpackt bestehenden Aufträgen, dadurch daß die Produkte die pro Produkttyp gelagert sind, auf einzelne Lagerförderer (5) auf einen Förderer (1,9) gesammelt werden und die gesammelten Produkte verschiedenes Typs mit Hilfe dieses Förderers (1,9) wieder einem Lagerförderer (5) zugeführt werden.

FIG. 1

EP 0 079 402 A1

- 1 -

## VERBESSERTES VERFAHREN ZUR VERARBEITUNG EINER AUFTRAGS-ZUSAMMENSTELLUNG FUR PRODUKTE UNTER BENUTZUNG VON TRAGERN

Die Erfindung bezieht sich auf eine Verbesserung der Lagerungsvorrichtung für Produkte unter Benutzung von Trägern wie beschrieben in der veröffentlichten Europäischen Patentanmeldung 0035818.

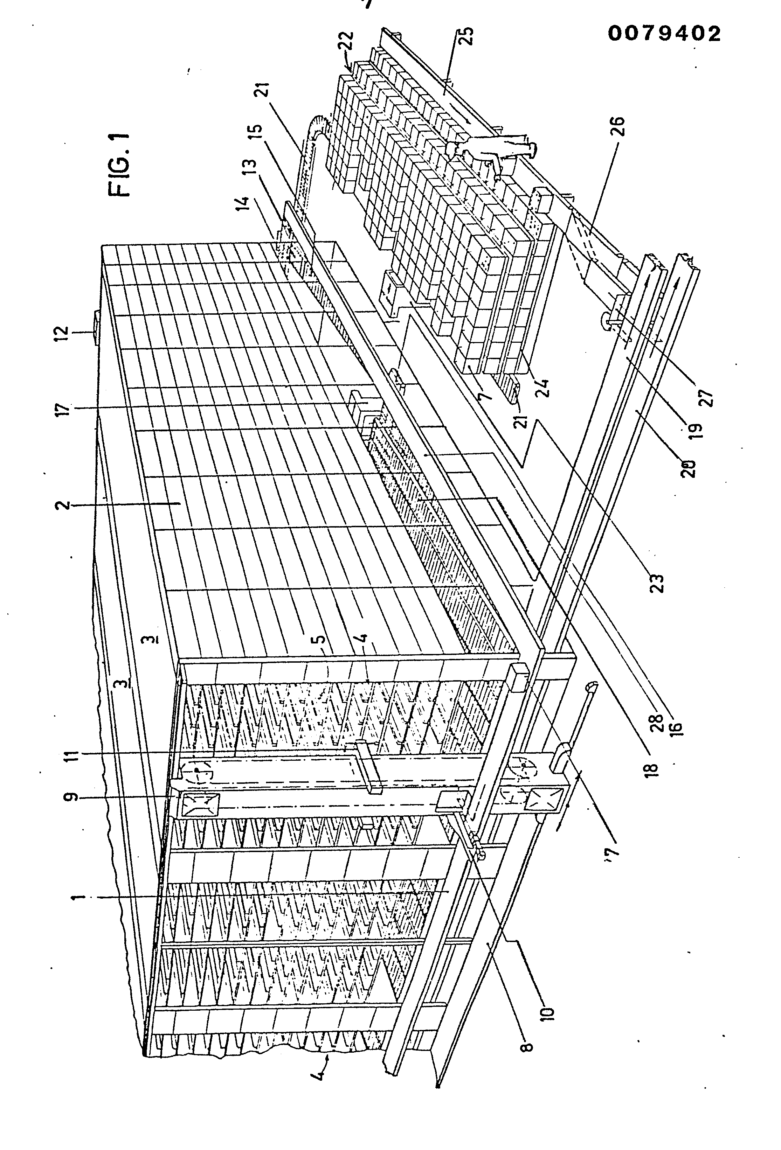

Die Lagerungsvorrichtung laut der Erfindung unterscheidet sich von der veröffentlichen Erfindung dadurch, dass gemäss Figur 1 der Entnahmeförderer (13) mittels wenigstens eines Förderers (28) verbunden ist mit Zufuhrförderern (1).

Damit wird ermöglicht, dass die Produkte welche Artikelweise auf Lagerbahnen (5) in Lagerungsstellagen (2) gelagert sind durch eine Entnahmehebevorrichtung (12) für bestimmte Aufträge während bestimmten Stunden aus verschiedenen Lagerbahnen (5) der Lagerstellagen (2) entnommen werden und mittels Förderer (28), Zuführförderer (1) und Lift (9) auftragsweise geordnet wieder in leeren Lagerbahnen von Lagerstellage (2) ablieferungsbereit gelagert werden.

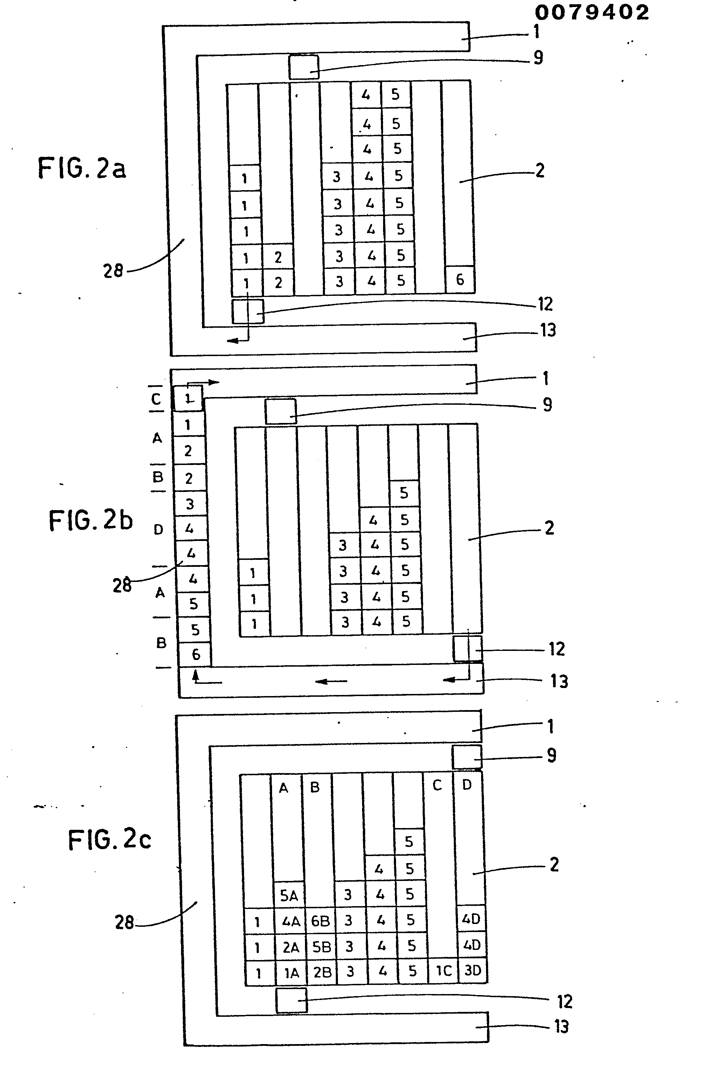

Der Vorgang der Auftragszusammenstellung ist in den Figuren 2a, 2b und 2c dargestellt.

Die verschiedenen Artikel sind als Beispiel von 1 bis 6 numeriert. Die mit zusammengestellten Aufträgen für Kunden beladenen Schrittförderer sind mit den Buchstaben A bis D gekennzeichnet. In Figur 2a sieht man die Situation bevor Anfang der Auftragszusammenstellung mit nur einer Produktensorte pro Lagerbahn.

In Figur 2b sieht man die Situation wenn die Entnahmevorrichtung (12) die für Aufträge A, B, C und D benötigten Artikel entnommen hat.

In Figur 2c sieht man die Situation wenn die Eingabevorrichtung 9 die Artikel auftragsweise geordnet wieder auf inzwischen leer geratene Schrittförderer gelagert hat.

Die obenbeschriebene Wirkungsweise hat als Vorteile:

a: Die schon vorhandenen Geräte wie die Förderer (1 und 13), die Eingabevorrichtung (9) und die Ausgabevorrichtung (12) können wenn sie nicht im Betrieb sind zur Ein- oder Aus führen von Produkten benutzt werden um schon in Vorrat komplette Aufträge zu formieren. Weil man die bereits gesammelten Aufträge schnell ausführen kann, braucht man weniger oder keine Pufferbahnen (18) zur schnellen Zusammenstellung von Aufträgen.

Dies gibt eine erhebliche Verringerung der mechanischen Aufwand. Weniger Pufferbahnen und mehr Platz für Lagerbahnen. Man hat dabei die Möglichkeit eine grosse Anzahl von Aufträgen in Vorrat zu formieren und ablieferbereit zu haben ohne dazu Raum ausserhalb der Lagerungsstellage (2) zu brauchen. Von besonderem Vorteil ist es dabei, dass leer geratene Lagerbahnen sofort wieder mit fertiggestellte Aufträgen beladen werden können. Die obenbeschriebene Lagerungsvorrichtung wird mittels eines Komputers gesteuert.
Dabei kann damit gerechnet werden dass die Ein- und Ausgabeliften eine optimale Sammelkapazität leisten. Es können also mehrere Aufträge gleichzeitig mit nur einem Satz von Ein- und Ausfuhrvorrichtungen zusammengestellt werden.

Wenn man die 4 Aufträge A, B, C und D sammeln muss und man das auf die Weise wie in Figur 3 dargestellt gleichzeitig fertigstellt, muss der Zubringervorrichtung (9) 6-mal und die Entnahmevorrichtung (12) auch 6-mal nach eine andere Stelle fahren.
Wenn man die Aufträge A, B, C und D der eine nach dem anderen zusammenstellt, muss der Zufuhrvorrichtung (9) nur 4-mal fahren, aber die Entnahmelift (12) muss 10-mal fahren.
Durch Fortlassung von allen oder ein Teil der Lagerbahnen (18) können in einer Bestimmten Raum mehr Lagerbahnen (5) aufgestellt werden.

Eine Variant besteht darin, dass komplette Aufträge zusammengestellt wie beschrieben in der genannten Europäischen Anmeldung 0035818 wieder an Lagerbahnen (5) zugeführt werden indem man die Ausfuhrförderer 19 und 20 mit Einfuhrförderer (1) verbindet. Alle kompletten Aufträge können später durch die Entnahmevorrichtungen (12) mit sehr grosser Leistung direkt an die Stapelmaschinen und die Ablieferungshalle oder Rampe ausgeliefert werden.

- 1 -

PATENTANSPRUCHE

1. Verfahren zur Lagerung von Produkten in Pappschachtel oder Lattenkisten oder auf Träger usw. verpackt, welche auf Lagerförderer gelagert werden, dadurch gekennzeichnet, dass die Produkte in Strömen eines einzigen Produkts den Lagerförderern (5) zugeführt werden, wonach die Produkte durch Förderer abgeführt und aufsneue in einer bestimmten Reihenfolge den Lagerförderern (5) zugeführt werden.

2. Verfahren nach Anspruch 1, dadurch gekennzeicnet, dass die Produkte durch die Entnahmevorrichtung (12) in der erwünschten Reihenfolge abgeführt werden, wonach die Produkte über Förderer (13) und (15) und Zubringervorrichtung (9) aufsneue aber nunmehr auftragsweise den Lagerförderer zugeführt werden.

3. Verfahren nach Anspruch 1, dadurch gekennzeichnet, dass durch die Entnahmevorrichtung (12) Produkte eines einzigen Types abgeführt werden, wonach die Produkte über Förderer (13, 28 und 1) und Zubringervorrichtung (9) aufsneue derart den verschiedenen Lagerförderern (5) verteilt werden, dass die Produkte in der erwünschten Unterzusammensetzung auf diese Lagerförderer zu liegen kommen.

4. Verfahren nach Anspruch 1, dadurch gekennzeichetn, dass die Entnahmevorrichtung (12) verschiedene Produkte für mehrere Aufträge abführt, aber dass die Produkte durch Zubringervorrichtung (9) derart den verschiedenen Lagerförderer (5) zugeführt werden, dass auf diese Lagerförderer (2) die Produkte in der, erwünschten Auftragszusammensetzung zu liegen kommen.

5. Verfahren nach Anspruch 1, dadurch gekennzeichnet, dass die Entnahmevorrichtung die Produkte den Bereitstellungslagenbahnen (18) zuführt, wonach die auf die Auftragssammelförderer (19) und (2) gebildeten Aufträge über die Förderer (29) und (1) und über Zubringervorrichtung (9) den Lagerförderer aufsneue zugeführt werden.

LK/LG/TvdS

FIG. 1

FIG. 2a

FIG. 2b

FIG. 2c

Europäisches
Patentamt

**EUROPÄISCHER RECHERCHENBERICHT**

**0079402**
Nummer der Anmeldung

EP 81201266.4

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe. soweit erforderlich. der maßgeblichen Teile | betrifft Anspruch | |
| D,A | WO - A1 - 81/02563 (TECHNISCH ONTWICKLINGSBUREAU VAN ELTEN) (=EP-A-0 035 818) ---- | 1 | B 65 G 1/06 |

**RECHERCHIERTE SACHGEBIETE (Int. Cl.³)**

B 65 G 1/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 17-06-1982 | PISSENBERGER |

EPA form 1503.1   06.78